# EUROPEAN PATENT APPLICATION

(11) **EP 1 038 821 A2**
(43) Date of publication of application: **27.09.2000**
(21) Application number: 00500043.5
(22) Date of filing: 17.03.2000
(51) Int. Cl.: B65H 75/42, H02G 11/02

(54) **Rewinding device for the power cord of an electrical appliance**

(30) Priority: 22.03.1999 ES 9900567
(71) Applicant: Electrodomesticos Taurus S.L., 25790 Oliana (Lleida) (ES)
(72) Inventor: Torregassa Prat, Josep, 25790 Oliana (Lleida) (ES); Vilaginés Orrit, Antoni, 25790 Oliana (Lleida) (ES); Trench Roca, Lluis, 08650 Sallent (Barcelona) (ES)
(74) Representative: Curell Aguilà, Marcelino

(57) **Abstract**

This rewinding device for the power cord of an electrical appliance, comprises the association of a seen rewindable electric cord, (1), with a concealed electrical cord (2) which may be compressed and extended by winding and unwinding, respectively, which are electrically connected together and anchored by said connection to a point of rotation close to the axis of rewinding of the cords, which operations occur separately and in the same direction on two parallel support planes, of which the support plane (4) of the seen cable (1), comprising the point of anchorage, is rotatory and is urged by a spring, while the support plane (5) of the concealed cord (2) is fixed and the latter is mechanically blocked at a peripheral point (6) of said fixed support plane (5), from which the concealed cord (2) extends for connection to the electrical appliance.

## Description

This invention relates to a rewinding device for the power cord of an electrical appliance, more precisely one of the type which, being contained within the housing of the electrical appliance, allows the power cord for connection of the receiving electrical appliance, contained therein, to an electrical power outlet to be pulled out by hand, and the subsequent automatic rewinding thereof. Any portion of the cord from nothing, when fully rewound, up to the maximum pull-out length may be stably pulled out.

The known devices of this type applied to small portable electrical appliances, such as household appliances, power tools and the like, are provided, between the electrical appliance and the inner end of connection thereto of the power cord, with a rotary electrical contact mechanism, formed from rotating rings and brushes, built into the automatic power cord rewinding device.

These rotary connection devices suffer from serious drawbacks, such as the cost, complexity, limited reliability, low electrical transmission power thereof, spark production affecting radio and television appliances and the limited number of connections, reduced to two power conductor wires.

With a view to overcoming such drawbacks, it would be desirable to have a rewinding device for the power cord of an receiving electrical appliance which allowed the transmission of any power, which did not have moving contacts, which allowed for the use of three-, four- or multicore cords, which did not produce electrical noise and which were economical and highly reliable.

In accordance with the foregoing premises, the solution has been adopted of connecting the power cord to the receiving electrical appliance by means of a resilient conductor member which converts the twists of the power cord, connected directly to the receiving electrical appliance, in turns of the said resilient conductor.

The device of the invention has been developed on the basis of said solution. It is characterized in that it comprises the association of a seen rewindable electric cord, which may be extended by unwinding, with a coiled concealed electrical cord which may be compressed and extended by winding and unwinding, respectively, which are electrically connected together by the ends thereof internal to the device, and anchored by said connection to a point of rotation close to the axis of rewinding and unwinding of the cords, which operations occur separately and in the same direction on two parallel support planes, of which the support plane of the seen cable, comprising the point of anchorage, is rotatory and is urged by a spring for automatic rewinding of the cord, which is loaded by unwinding of the cord, while the support plane of the concealed cord is fixed and the latter is mechanically blocked at a peripheral point of said fixed support plane, from which the concealed cord extends over an non-extensible length which is appropriate for connection at the free end thereof to the receiving electrical appliance.

One feature of the invention is that the fixed support plane of the concealed cord and the rotatory plane of the seen cord are formed by discoid surfaces, of which the fixed support plane is fixedly provided with a centre shaft on which there is freely rotatorily mounted a hub of the rotatory support plane, which is concentric with a large external bushing to which there is non-rotatorily attached a third discoid surface, which may rotate with the previous one, with which they form the flanges of a flattened reel which receives and guides the seen cable in the movements thereof, at the same time as said rotatory support plane forms a rotatory lid for the fixed support plane, there being formed between both an annular housing in which the concealed cord is compressed or wound up centripetally and extended centrifugally. The fixed support plane has a low perimetral wall with the edge thereof facing the edge of a skirt of the rotatory support plane, there being formed between both support planes and the perimetral extensions thereof the housing for the movements of the concealed cord, from which the latter may not come out.

A further feature of the invention is that the seen cord is connected to the concealed cord by a terminal strip or the like, situated at a fixed point inside the external bushing, removed from the axis of the support planes of both cords, with the concealed cord extending from the terminal strip to the fixed support plane thereof through a hole formed in the rotatory support plane, at the same time as the seen cord accedes to the rotatory support plane thereof through a lateral aperture of the external bushing, provided with shaped inner walls for accompanying the seen cord.

Yet a further feature of the invention is that in the external bushing there is housed the casing of a coil spring arrangement which anchors one end in a centre core, which may be non-rotatably attached to the centre shaft of the fixed support plane and the other end to a point of the base of said housing, which is provided with external radial bosses, which are matingly housed in respective notches provided in said external bushing, and a closure cover, with both the base and the cover of said housing having a large hole relative to said centre shaft.

The invention contemplates that the fixed support plane is provided on the periphery thereof with means for engagement with a cover member covering the external bushing and the housing of the spring arrangement and which serves as mounting for the centre core of said arrangement, which has a further mounting on the cover of said housing, allowing access to the axial orifice of the centre shaft of the fixed support plane, in which there is engaged a plug. On the other hand, the engaging means consist of four columns, disposed on the apexes of extensions of the fixed support plane comprised in a rectangle in plan view, to which the cover member is fixed by screws and which also has a flat rectangular shape with a low, centrally bored centre frustoconical protuberance.

It is also contemplated in the invention that the seen cord and the concealed cord are multicore cords, preferably three-core, in which case one of the conductors is the earth connection and that the seen cord comprises an external, insulating and abrasion resistant sheath, formed preferably by synthetic resin material, while the concealed cord comprises, also preferably, a textile sheath which is insulating, resilient and resistant to wear caused by the successive rewindings and unwindings thereof.

To facilitate the understanding of the present invention, there is described one embodiment thereof with reference to the accompanying illustrative drawings, in which:
Figure 1 is a schematic view of the arrangement of the seen cord in the rewound position thereof and of the concealed cord in the compressed position thereof;
Figure 2 is a similar view to that of Figure 1, of the seen cord in the unwound position thereof and of the concealed cord in the expanded position thereof;
Figure 3 is an exploded perspective view of the rewinding device for power cord of an electrical appliance according to the invention;
Figure 4 is a cross section view of the rewinding device of the previous Figure, after assembly of the component parts thereof;
Figure 5 is a plan view of a detail of the external bushing of the rotatory support plane, showing the connection of both the seen and the concealed cord and the route followed by them in the device;
Figure 6 is a plan view of the base of the housing for the coil spring arrangement, wherein the anchorage of the spring to the centre core on the one hand and to the base itself on the other hand is to be seen;
Figure 7 is a plan view of the rewinding device for the power cord of an electrical appliance, according to the invention, seen from the side where the ratchet arrangement appears.

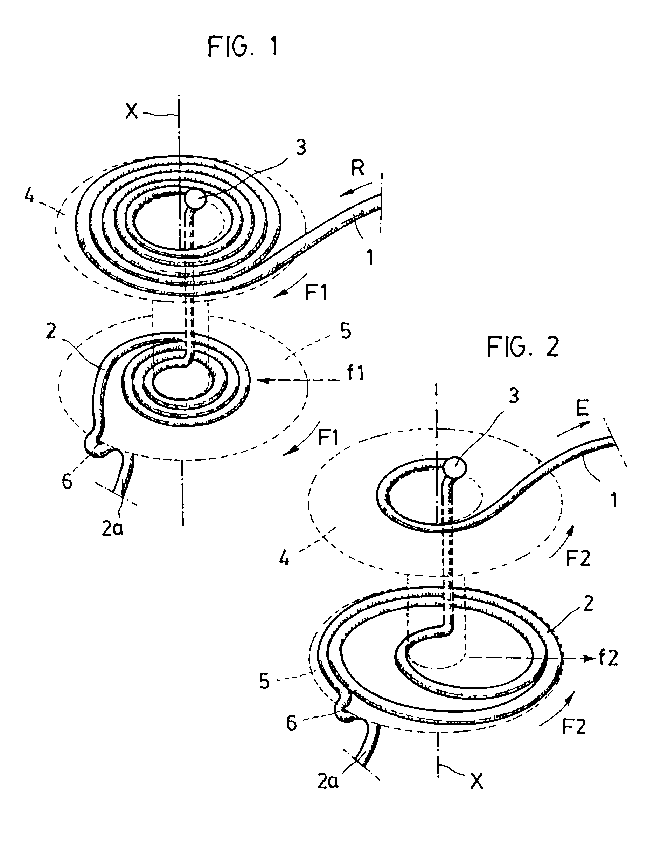

With reference to Figures 1 and 2, the invention consists essentially of the associated of a rewindable electrical cord 1, which may be extended by unwinding, with a coiled concealed electrical cord 2, which is capable of being compressed or rewound up and of extension by winding and unwinding, respectively. These cords are electrically connected together at the ends thereof internal to the device, by a connector 3 and are attached by said connector 3 to a point of rotation close to the axis X of rewinding and unwinding of the seen cord 1 and concealed cord 2, which operations are performed separately and in the same direction on two mutually parallel support planes, of which the one corresponding to the seen cord 1, designated as the rotatory support plane 4, comprises the point of attachment of the connector 3 and is urged by a spring (not shown) which causes the automatic rewinding of the seen cord 1 and is loaded by unwinding of the latter, while on the one corresponding to the concealed cord 2, designated as fixed support plane 5, the concealed cord 2 is mechanically locked to a peripheral point 6 of the fixed support plane 5, from which said concealed cord 2 extends with a non-extensible portion 2a which is adapted at the free end thereof for connection to the electrical appliance.

As is to be seen in Figure 1, in which the seen cord 1 and the concealed cord 2 are rewound within the device, the cords are wound up separately in their respective rotatory support plane 4 and fixed plane 5 which, in the drawing, have been illustrated with an exaggerated separation, and in the same direction as shown by the arrows F1, with the seen cord 1 being rewound in the direction of the arrow R and the concealed cord being compressed or wound up centripetally, as shown by the arrow f1.

Figure 2 shows the seen cord 1 and the concealed cord 2, respectively, extended in the direction of the arrow E and extended centrifugally in the direction of the arrow f2, both being unwound in the same direction as shown by the arrow F2.

The point of connection of the seen and concealed cords 1 and 2, on the connector 3, will obviously describe a circumferential trajectory about the axis X, without any torsion being caused in either the seen cord 1 or the concealed cord 2, since the latter, instead of being twisted, extends in the direction of the arrow F2, as has already been said above.

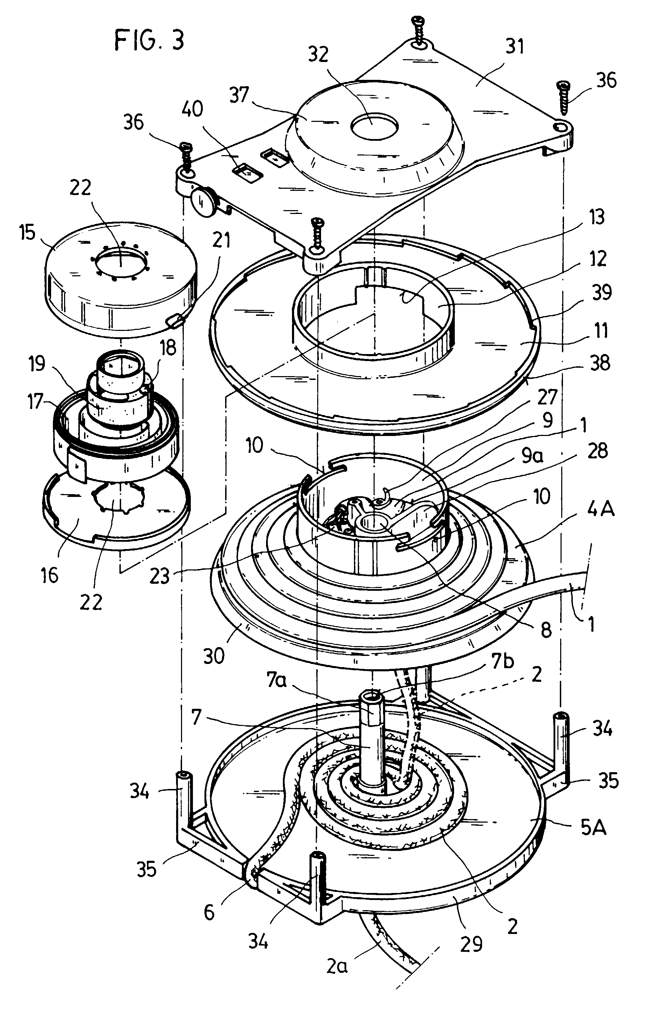

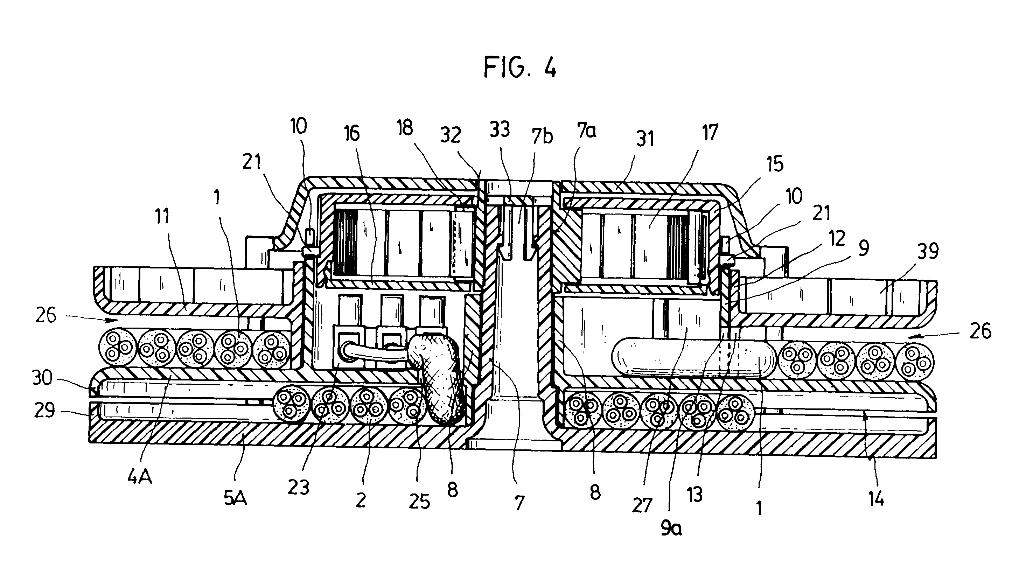

With reference now to Figure 3, it will be seen that the rotatory support plane 4 of the seen cord 1 and fixed support plane 5 of the concealed cord 2 are formed by the rotatory discoid member 4A and fixed discoid member 5A. The fixed discoid member 5A is fixedly provided with a centre shaft 7 on which there is freely rotatably mounted a hub 8 of the rotatory discoid member 4A and which is concentric with a large external bushing 9, provided with an aperture 9a for the passage of the seen cord 1 and two inverted T-shaped notches 10, in which there is non-rotatably attached a third discoid surface formed by a driven discoid member 11 which is provided with a sleeve 12 and rests at one edge on the rotatory discoid member 4A and at the other edge is aligned below the cross bar (tilde) of the notches 10 and is provided, in correspondence with the aperture 9a of the external bushing 9, with a large rectangular notch 13 which forms the passage for the seen cord 1 with the said aperture 9a. The discoid member 4A and the driven member 11 form the flanges of a flattened reel, as shown in Figure 4, which receives and guides the seen cord 1 in the movements thereof, at the same time as said discoid member 4A forms a rotatory lid for the fixed discoid member 5A, there being formed between both an annular housing 14 in which the concealed cord 2 moves in the compression or rolling up thereof in the centripetal direction as shown by the arrow f1 and in the expansion thereof in the centrifugal direction, as shown by the arrow f2.

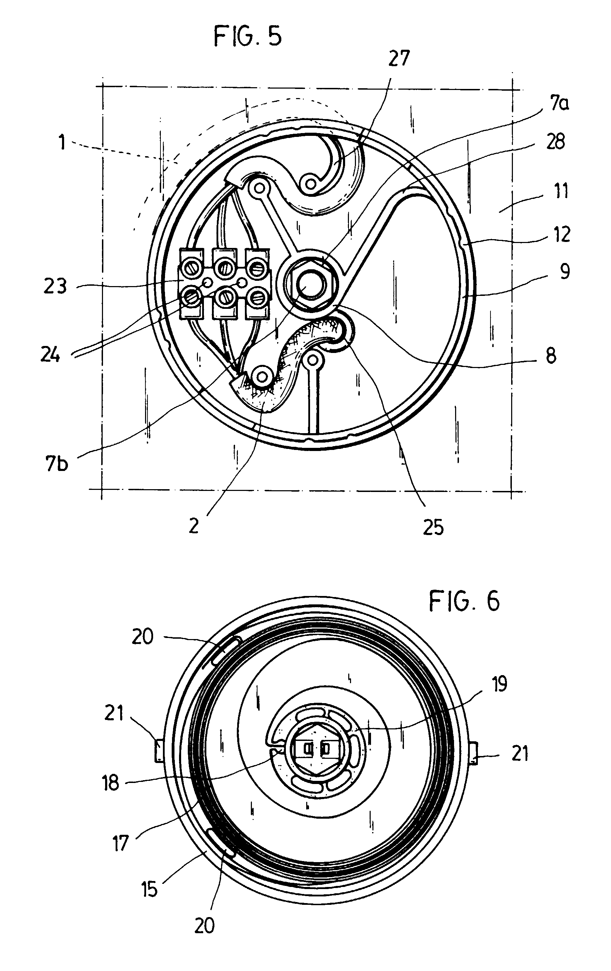

Still with reference to Figure 3, is will be seen that in the large external bushing 9 situated concentrically relative to the hub 8 of the rotatory discoid member 4, there is housed a casing formed by a base member 15 and a lid member 16, enclosing a coil spring 17 anchored at one end in a slot 18 of a centre core 19, which is non-rotatably attached to the facetted portion 7a of the centre shaft 7 of the fixed discoid member 5A, and at the other end to one of the projections 20 (Figure 6) of the said base member 15. The said base member 15 of the coil spring 17 casing is provided in the illustrated example with two diametrically opposite external radial bosses 21 which are housed in one end or the other of the notches 10, depending on the direction of rewinding of the rewinding device. Both the base member 15 and the lid member 16 are provided with a respective orifice 22 through which the centre shaft 7 can pass with a clearance.

The connection between the inner ends of the seen cord 1 and the concealed cord 2 is effected, as shown in Figure 5, by means of the terminal strip 23 which, as the connector 3 of Figures 1 and 2, is fixedly located at a point in the inside of the external bushing 9 removed from the axis X by fixing means which may be formed by fixing pins 24 of the terminal strip 23. The concealed cord 2 passes from the terminal strip 23 to the annular housing 14 through the hole 25 and the seen cable 1 reaches the throat 26 of the reel through the aperture 9a of the external bushing 9 and through the notch 13 of the sleeve 12 of the driven discoid member 11 and flanked by the shaped accompanying walls 27 and 28 thereof.

As may be seen in Figures 3 and 4, the fixed discoid member 5A is provided with a low perimetral wall 29, the edge of which faces the edge a skirt 30 of the rotatory discoid member 4A, the annular housing 14 being formed between both discoid members.

Still with reference to Figures 3, 4 and 7, it will be seen that the fixed discoid member 5A is provided, at points on the periphery thereof, with means for engagement with a cover member 31 which covers the external bushing 9 and the base member 15 of the spring 17 casing, acting as a mounting with the orifice 32 thereof for the centre core 19 which has the other mounting thereof in the lid member 16. The orifice 32 allows a plug 33 to be press fitted into an orifice 7b of the centre shaft 7. The engaging means consist of four columns 34, distributed on the apexes of extensions 35 of the fixed discoid member 5A which define a rectangle in plan view, in which the cover member 31 is fixed by screws 36. The cover member 31 also has a flat rectangular shape with a frustoconical protuberance 37 of low height in which the orifice 32 is located.

The driven discoid member 11 is provided, on the inside of a perimetral bead 38, with a regular series of teeth 39 which with a pawl 40, mounted in the cover member 31 and urged by a spring, forms a ratchet brake arrangement.

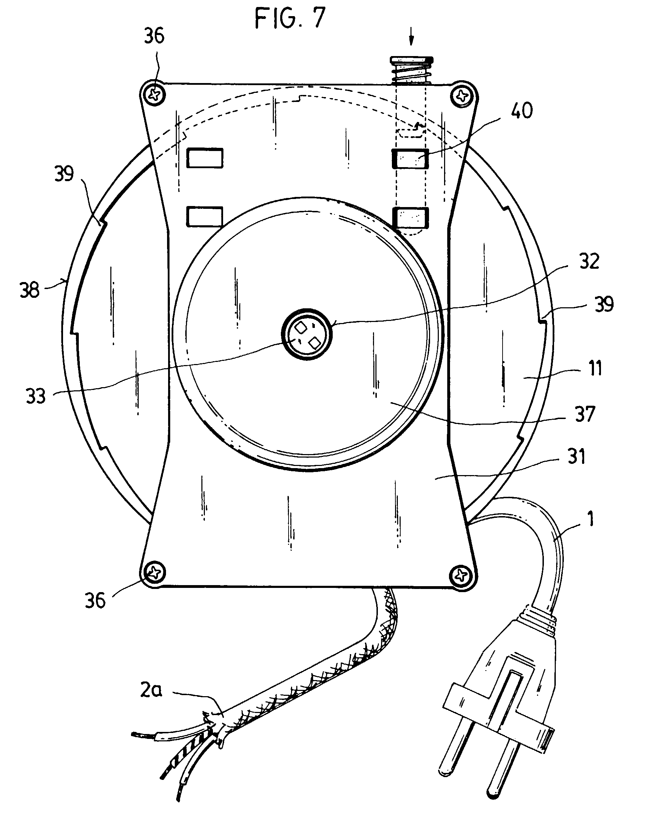

The seen cord 1 and the concealed cord 2 are multicore cords, preferably three-core, in which case one is the earth connection, as shown in Figure 7.

According to one preferred embodiment, the seen cord comprises an external insulating, abrasion-resistant sheath of synthetic resin material, while the concealed cord comprises a textile sheath which is insulating, resilient and resistant to friction from the successive rewinding and unwinding operations.

## Claims

1. A rewinding device for the power cord of an electrical appliance, more precisely one of the type which, being contained within the housing of the electrical appliance and housing said cord, allows the power cord to be pulled out by hand, and the subsequent automatic rewinding thereof, characterized in that it comprises the association of a seen rewindable electric cord, (1) which may be extended by unwinding, with a coiled concealed electrical cord (2) which may be compressed and extended by rewinding and unwinding, respectively, which are electrically connected together by the ends thereof internal to the device, and anchored by a connector (3) to a point of rotation close to the axis (X) of rewinding and unwinding of the cords (1, 2), which operations occur separately and in the same direction on two parallel support planes, of which the support plane (4) of the seen cable (1), comprising the point of anchorage, is rotatory and is urged by a spring for automatic rewinding of the cord (1) which is loaded by the unwinding thereof, while the support plane (5) of the concealed cord (2) is fixed and the latter is mechanically blocked at a peripheral point of said fixed support plane (5), from which the concealed cord (2) extends over an unextensible length (2a) which is appropriate for connection at the free end thereof to the receiving electrical appliance.

2. The device of claim 1, characterized in that the fixed support plane (5A) of the concealed cord (2) and the rotatory support plane (4) of the seen cable (1) are formed by discoid surfaces (5A, 4A), of which the fixed support plane (5A) has fixedly attached thereto a centre shaft (7) on which there is freely rotatably mounted a hub (8) of the rotatory support plane (4), which is concentric with a large external bushing (9) to which there is non-rotatably attached a third discoid surface (11) which may rotate with the former, forming the flanges of a flattened reel which receives and guides the seen cord (1) in the movements thereof, at the same time as said rotatory support plane (4) forms a rotatory lid for the fixed support plane (5), forming between both an annular housing (14) in which the concealed cord (2) moves when being compressed or rewound centripetally and expanded centrifugally.

3. The device of claims 1 and 2, characterized in that the seen cord (1) is connected to the concealed cord (2) by a terminal strip (23) or the like, situated at a fixed point in the interior of the external bushing (9) removed from the axis (X) of the support planes of both cords, with the concealed cord (2) extending from the terminal strip (23) to the fixed support plane (5) thereof through an orifice (25) formed in the rotatory support plane (4) at the same time as the seen cord (1) accedes to the rotatory support plane (4) thereof through a lateral aperture (9a) of the external bushing, provided with shaped internal walls for accompanying the seen cord (1).

4. The device of claim 1, characterized in that in the external bushing (9) there is housed a casing of a coil spring arrangement which is anchored at one end in a centre core (19), which may be non-rotatably attached to the centre shaft (7) of the fixed support plane and at the other end to a point of the base (15) of said housing, which is provided with external radial bosses (21), which are matingly housed in respective notches (10) provided in said external bushing (9), and a closure cover, with both the base (15) and the cover (16) of said housing having a large hole (22) relative to said centre shaft (7).

5. The device of claim 2, characterized in that the fixed support plane (5) has a low perimetral wall (29) with the edge thereof facing the edge of a skirt (30) of the rotatory support plane (4), there being formed between both support planes and the perimetral extensions thereof the housing (14) for the movements of the concealed cord (2), from which the latter may not come out.

6. The device of claim 1, characterized in that the fixed support plane (5) is provided on the periphery thereof with means for engagement with a cover member (31) covering the external bushing (9) and the housing of the spring arrangement and which serves as mounting for the centre core (19) of said arrangement, which has a further mounting on the cover (16) of said housing, allowing access to the axial orifice (7b) of the centre shaft (7) of the fixed support plane (5), in which there is engaged a plug (33).

7. The device of claim 6, characterized in that the engaging means consist of four columns (34), disposed on the apexes of extensions (35) of the fixed support plane (5) comprised in a rectangle in plan view, to which the cover member (31) is attached by screws and which also has a flat rectangular shape with a low, centrally bored centre frustoconical protuberance (37).

8. The device of claim 2, characterized in that the third discoid surface (11) is provided with ratchet toothing associated with a pawl (40), mounted in the cover member (31).

9. The device of claim 1, characterized in that the seen cord (1 ) and the concealed cord (2) are multicore, being preferably three-core, in which case one of the conductor wires is the earth connection.

10. The device of claim 1, characterized in that the seen cord (1) comprises an external insulating and abrasion resistant sheath, formed by a synthetic resin material, while the concealed cord (2) comprises a textile sheath, which is insulating, resilient and resistant to the friction of the successive rewinding and unwinding operations.
